Europäisches Patentamt

European Patent Office

Office européen des brevets

(19)

(11) EP 0 939 507 A1

(12) **DEMANDE DE BREVET EUROPEEN**

(43) Date de publication:
01.09.1999 Bulletin 1999/35

(51) Int Cl.⁶: **H04J 3/06**

(21) Numéro de dépôt: 99200452.3

(22) Date de dépôt: 16.02.1999

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: 25.02.1998 FR 9802282

(71) Demandeur: **Koninklijke Philips Electronics N.V.
5621 BA Eindhoven (NL)**

(72) Inventeurs:
• **Bedgedjian, Jean, Société Civile S.P.I.D.
75008 Paris (FR)**
• **Teboul, Guillène, Société Civile S.P.I.D.
75008 Paris (FR)**

(74) Mandataire: **Caron, Jean
Société Civile S.P.I.D.
156, Boulevard Haussmann
75008 Paris (FR)**

(54) **Système interactif de distribution de signaux audio-vidéo numériques**

(57) Un pointeur doit être émis au moins une fois toutes les T millisecondes pour indiquer la position d'un marqueur de temps. Une interruption ($\nabla$) intervient toutes les T millisecondes. Un nombre déterminé N de trames entières étant transmises en T millisecondes, il reste uniquement de la place pour transmettre une portion contenant R symboles de la N+1 ème trame avant l'interruption suivante. On insère un paquet contenant un pointeur avec un décalage après chaque interruption. Supposons qu'à un instant t, une première interruption a été générée et qu'un paquet de signalisation (x) a été transmis immédiatement avec un pointeur indiquant un nombre (x) de périodes symboles. Lors de l'interruption suivante, N paquets ont été transmis entièrement depuis le dernier pointeur, plus R symboles. On attend la fin de l'émission de ce paquet soit U = C - R périodes symboles pour émettre un nouveau paquet (x-U) de signalisation. La valeur du pointeur que contient ce paquet devra donc prendre en compte ce décalage en étant décrémentée de U symboles, soit x - U, et ainsi de suite.

Applications : systèmes interactifs de distribution de signaux, notamment télévision numérique.

FIG. 3

## Description

La présente invention concerne un système interactif de distribution de signaux audio-vidéo, avec un canal dit descendant et un canal dit montant, le canal descendant transmettant des signaux sous la forme de paquets numériques depuis un serveur vers des usagers, une horloge destinée au multiplexage de messages montant depuis les usagers vers le serveur étant définie par des marqueurs dont la position est indiquée périodiquement par un nombre, appelé pointeur, incorporé dans un des paquets du canal descendant, ce pointeur indiquant le temps restant à écouler entre le moment où le pointeur apparaît et le moment où est placé le marqueur.

Elle concerne aussi un signal audio-vidéo pour un système avec un canal dit descendant et un canal dit montant, signal transmis dans le canal descendant sous la forme de paquets et comprenant entre autres une horloge, servant au multiplexage de messages dans le canal montant, définie par des marqueurs dont la position est indiquée périodiquement par un pointeur incorporé dans un des paquets, dont la valeur indique le temps restant à écouler entre le moment où le pointeur apparaît et le moment où est placé le marqueur.

Elle concerne encore un procédé pour calculer, dans un système interactif de distribution de signaux audio-vidéo numériques transmettant des signaux depuis un serveur vers des usagers sous la forme de paquets, la valeur d'un pointeur indiquant la position d'un marqueur de temps, incorporé dans un des paquets, la valeur de ce pointeur indiquant le temps restant à écouler entre le moment où le paquet contenant le pointeur apparaît et le moment où est placé le marqueur.

L'invention s'applique dans les systèmes numériques interactifs fonctionnant sur réseaux tels que câbles et satellites.

Un système interactif de distribution de signaux audio-vidéo numériques selon le préambule ci-dessus est spécifié par les normes ETS 300 800 et DAVIC (ETS = European Telecommunication Standard). Ce standard prévoit une horloge, servant au multiplexage de messages montant depuis les usagers vers le serveur, qui est définie par des marqueurs dont la position est indiquée périodiquement par un nombre, appelé pointeur, incorporé dans un paquet.

Un objet de l'invention est d'améliorer la définition de l'horloge pour la synchronisation des messages d'usagers vers le serveur.

A cet effet, le système comporte des moyens pour générer un paquet contenant un pointeur à un instant décalé par rapport à celui où il aurait dû être généré, et pour diminuer la valeur de ce pointeur d'une quantité égale au temps écoulé entre l'instant où le paquet qui le contient aurait dû être généré et l'instant où il l'est.

Un signal audio-vidéo est remarquable en ce qu'un paquet contenant un pointeur est généré à un instant décalé par rapport à celui où il aurait dû être généré, et la valeur de ce pointeur est diminuée d'une quantité égale au temps écoulé entre l'instant où le paquet qui le contient aurait dû être généré et l'instant où il l'est.

Le procédé selon l'invention consiste en ce qu'un paquet contenant un pointeur est généré à un instant décalé par rapport à celui où il aurait dû être généré, en ce que la valeur de ce pointeur est diminuée d'une quantité égale au temps écoulé entre l'instant où le paquet qui le contient aurait dû être généré et l'instant où il l'est.

Ces aspects de l'invention ainsi que d'autres aspects plus détaillés apparaîtront plus clairement grâce à la description suivante d'un mode de réalisation constituant un exemple non limitatif.

La figure 1 représente schématiquement l'ensemble d'un réseau de distribution de télévision, avec interactivité.

La figure 2 est un diagramme de temps qui illustre un flux descendant incluant les marqueurs de temps et des messages MAC-IB qui permettent aux unités d'interface d'usager de les reconstruire.

La figure 3 est un diagramme de temps qui illustre le lien entre les marqueurs de temps, les pointeurs et des paquets de signalisation MAC-IB.

La figure 4 illustre un exemple de fonctionnement du pointeur.

La figure 5 est un organigramme illustrant un algorithme de génération d'un pointeur.

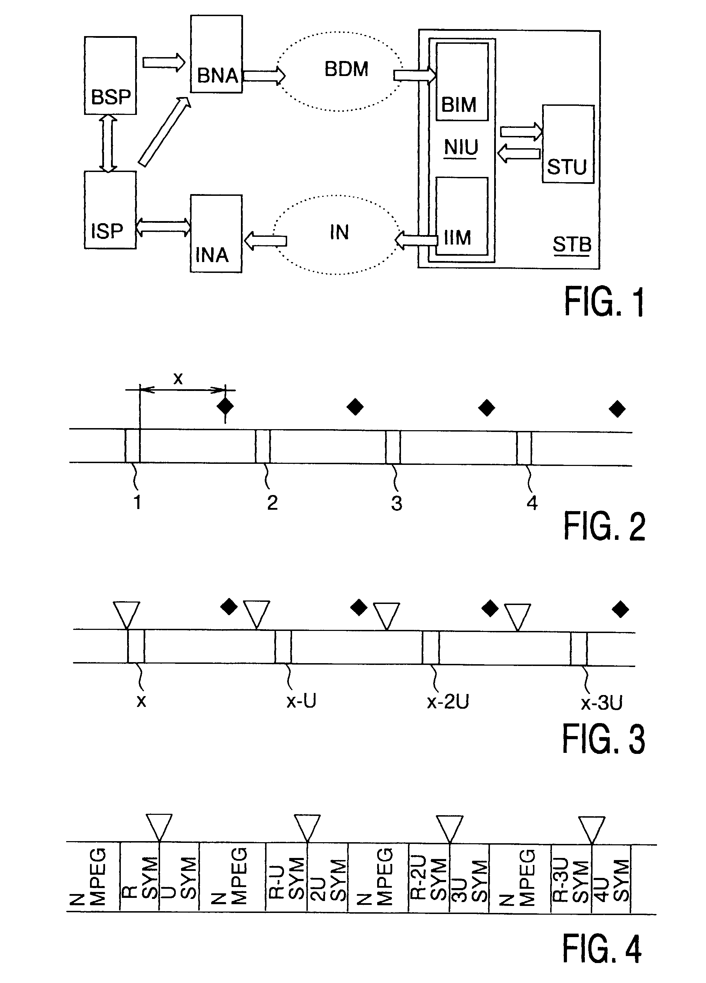

L'invention est illustrée par l'exemple d'un réseau de distribution de télévision ; elle s'appliquerait également à tout autre système interactif de distribution de signaux numériques. Le réseau de distribution de télévision de la figure 1 comprend, dans un canal descendant, un serveur ou fournisseur de services de télédiffusion BSP qui fournit la matière à émettre à un adaptateur de réseau de télévision BNA, qui adapte les émissions pour les transmettre à une liaison descendante, ou media délivrant des émissions symbolisée par un cadre ovale en trait pointillé BDM. En pratique la liaison BDM est par exemple une émission terrestre en numérique ou une émission par satellite, ou encore une distribution par câble. Du côté réception, un récepteur décodeur d'usager STB comprend une unité d'interface de réseau NIU constituée d'un module d'interface de réception BIM et d'un module d'interface interactif IIM. Le module BIM adapte les signaux reçus pour les délivrer à une unité STU, capable de fournir des images et des sons,

En ce qui concerne le canal montant, l'unité STU délivre des messages, à envoyer vers le serveur, au module IIM, qui les adapte pour les transmettre à une liaison montante, ou réseau d'interaction, symbolisé par un cadre ovale en trait pointillé IN. Du côté du serveur, un adaptateur de réseau interactif INA adapte les signaux reçus pour les délivrer à un fournisseur de service interactif ISP qui transmet les messages au fournisseur BSP.

En mode dit "In Band", c'est-à-dire avec une signalisation intégrée dans le canal descendant vidéo, le problème est de synchroniser les unités d'interface d'usager sur le système. Une signalisation relative à la voie montante est reçue en voie descendante. La voie descendante est constituée des données diffusées dans le sens allant de la tête de réseau vers les usagers, ce qui signifie que tous les usagers reçoivent toutes les informations. La voie montante est constituée des données émises par les usagers vers la tête de réseau qui est seule à recevoir les informations. Dans ce but, on spécifie des "marqueurs de temps". Ils délimitent des intervalles de T millisecondes. Diffusés en voie descendante, ces marqueurs servent aux unités d'interface d'usager à se synchroniser. Un marqueur doit être généré au moins toutes les T millisecondes, avec donc au minimum un marqueur par intervalle délimité.

La Figure 2 représente un exemple de flux "In Band" descendant, avec des trames de données dont la suite est interrompue périodiquement par des paquets de signalisation 1, 2, 3, 4, comprenant un pointeur, qui sont indiqués en gris. Le pointeur permet aux unités d'interface d'usager de reconstituer l'horloge système représentée par les losanges noirs.

Le pointeur contient entre autres un bit de validité exprimant le fait que le pointeur est valide, et un champ qui représente précisément le nombre "x" de périodes symboles entre le premier symbole de l'octet de synchronisation du paquet suivant le paquet de signalisation et le prochain marqueur de période de T millisecondes.

Dans un cas idéal, comme celui décrit en Figure 2, un paquet de signalisation dit MAC-IB ("Media Access Control - In Band") peut être inséré périodiquement à la même position dans le flux, par rapport aux marqueurs de temps en noir. La problématique dans le cas concret d'un équipement existant vient du fait que le paquet de signalisation en question ne peut pas toujours être inséré aussi régulièrement par rapport aux paquets. Les paquets de signalisation sont insérés lors d'interruptions qui sont déclenchées périodiquement. En nommant "Fbaud" la fréquence symbole du modulateur utilisé en voie descendante, il y a $S = (T * Fbaud)$ périodes symboles descendantes durant T millisecondes. Si une trame représente C symboles, en T millisecondes, sont transmises $N = INT (S/C)$ trames entières (INT est l'opérateur "valeur entière"). Il reste uniquement de la place pour transmettre $R = S - (N*C)$ symboles de la N+1 ème trame. Si R est nul, il y a un nombre entier de trames dans une période T millisecondes, donc le paquet de signalisation contenant le marqueur peut être inséré précisément à chaque interruption, comme dans le cas idéal de la Figure 2. Par contre si R est non nul, on ne peut insérer le paquet en question précisément à chaque interruption mais avec un décalage. Une illustration de ce phénomène de décalage est fournie en Figure 3. Dans les équipements réels, un paquet contenant au moins les informations de signalisation "In Band" est inséré exactement toutes les T millisecondes via une interruption, comme le montre la Figure 3, dans laquelle les interruptions sont représentées par des triangles. On suppose que le pointeur doit être émis au moins une fois toutes les T millisecondes, donc à chaque interruption. Supposons qu'à un instant t, la première interruption a été générée et que le paquet de signalisation MAC-IB généré dans l'adaptateur BNA a été transmis immédiatement, comme représenté dans le premier paquet de signalisation de la Figure 3, avec donc un nombre "x" de périodes symboles. Lors de l'interruption suivante, dans le cas où $R \neq 0$, N paquets ont été transmis entièrement depuis le dernier pointeur, plus R symboles, sur un total de C symboles du paquet en cours, qui est le N+1ème. Il faut donc attendre la fin de l'émission de ce paquet soit $U = C - R$ périodes symboles pour émettre le paquet de signalisation MAC-IB. La valeur du pointeur que contient ce paquet devra donc prendre en compte ce décalage en étant décrémentée de U symboles. C'est ce qu'illustre la Figure 3 dans laquelle le second paquet MAC-IB de signalisation émis est décalé par rapport à l'interruption et la valeur du pointeur qu'il comprend est décrémentée de U symboles, soit x - U. Lors de l'interruption suivante, soit à t + T millisecondes, N paquets auront été émis en entier et $C-(2*U)$ symboles du Nième paquet. Il faudra donc attendre $(2*U)$ symboles avant de pouvoir émettre le paquet de signalisation MAC-IB qui comprendra une valeur de pointeur prenant en compte ce décalage de $(2*U)$ symboles. Cette opération de décalage se répète comme décrit précédemment.

La Figure 4 donne un exemple de fonctionnement du pointeur, dans le cas d'un standard MPEG. L'indication N MPEG signifie N trames MPEG et SYM signifie symbole donc R SYM ou U SYM signifient R ou U périodes symbole ; il faut noter que le premier paquet N MPEG dans cette figure est le paquet MAC-IB contenant le pointeur. D'autres paquets MAC-IB peuvent être insérés à la suite de celui contenant le pointeur, ces autres paquets ont leur bit de validité nul, et contiennent d'autres types de message de signalisation mais pas de pointeur. Les interruptions sont représentées par des triangles. Elles sont générées en cours d'émission de trames MPEG $(R \neq O)$. Les symboles déjà émis à cet instant sont à gauche de l'interruption alors que les symboles restants à émettre sont à droite.

Cependant quand I*U, où I est le numéro de l'itération en cours en comptant depuis le départ, dépasse C, soit une trame MPEG, un modulo est effectué introduisant un paquet MPEG de décalage.

Un exemple précis permettra de fixer les idées. Supposons que la norme choisie est ETS 300800. Les marqueurs de temps délimitent des intervalles de 3 millisecondes. Un marqueur doit être généré au moins toutes les 3 millisecondes. On choisit une fréquence symbole de modulateur 64 QAM, Fbaud = 6,875 Mbaud. Dans ce cas il y a S = 20 625 périodes symboles descendants dans 3 millisecondes. Une trame MPEG représente C = 272 symboles.

Or un paquet MAC-IB au moins est inséré exactement toutes les 3 millisecondes via une interruption, et la norme ETS 300800 spécifie que le pointeur doit être émis au moins une fois toutes les 3 millisecondes, donc à chaque interruption. Supposons qu'à un premier instant t, la première interruption a été générée et que le paquet de signalisation MAC-IB a été transmis immédiatement, comme représenté dans le premier paquet de signalisation de la Figure 3. Lors de l'interruption suivante, N = 75 paquets MPEG ont été transmis entièrement depuis le dernier pointeur plus R = 225 symboles, sur un total de C = 272 pour un paquet MPEG soit R = (272 - 47) du paquet MPEG en cours. Il faut donc attendre la fin de l'émission de ce paquet soit U = 47 périodes symboles pour émettre le paquet de signalisation MAC-IB. La valeur du pointeur que contient ce paquet devra donc prendre en compte ce décalage en étant décrémentée de U = 47 symboles. Lors de l'interruption suivante, soit à t + 3 millisecondes, 75 paquets MPEG auront été émis en entier et (272 - 47 - 47) soit 178 symboles du 76ème paquet. Il faudra donc attendre 2U = 94 symboles avant de pouvoir émettre le paquet de signalisation MAC-IB qui comprendra une valeur de pointeur prenant en compte ce décalage de 2U = 94 symboles, et ainsi de suite.

Dans la figure 4, ceci conduit aux valeurs suivantes : chaque "N MPEG" vaut "75 MPEG", R vaut 225, U vaut 47. Quand n * 47 dépasse 272, soit une trame MPEG, un modulo est effectué introduisant un paquet MPEG de décalage.

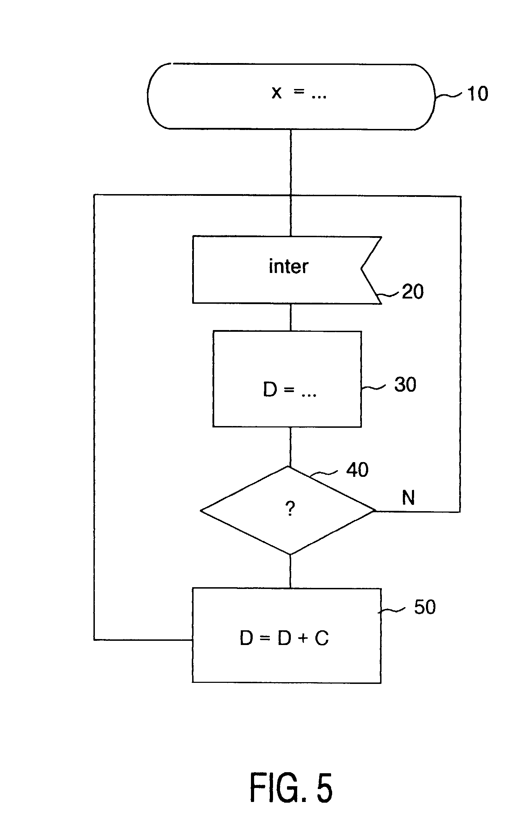

Dans l'organigramme de la figure 5, le module 10 figure l'opération d'initialisation, dans laquelle la valeur de départ de "x" est

$$x = \text{Offset} + \text{Facteur\_de\_Décorrélation}$$

"Offset" est une valeur fixe qui peut être ajoutée dans la valeur de "x", de telle manière que le système soit calé par rapport à l'unité d'interface de réseau la plus éloignée de l'adaptateur de réseau, et que le calage temporel soit toujours fait avec des valeurs positives.

Facteur_de_Décorrélation est une valeur multiple de C. Elle sert à positionner librement la référence de la base de temps des unités d'interface d'usager dans n'importe quel intervalle de T millisecondes intervenant après l'interruption. Une autre méthode pour réaliser la même fonction consisterait à décaler l'insertion des paquets MAC-IB contenant un pointeur valide.

Le module 20 figure une interruption.

Le rectangle 30 figure l'opération :

$$\text{Décalage (I)} = (\text{Décalage (I-1)} - U) \text{ modulo C} + \text{Facteur\_de\_Décorrélation}$$

Le rectangle 40 figure le test : décalage <= Facteur_de_Décorrélation + C

Enfin le rectangle 50 figure l'opération : décalage = décalage + C

Notons que si R=0, alors U=C et à chaque itération Décalage = Offset.

## Revendications

1. Système interactif de distribution de signaux audio-vidéo, avec un canal dit descendant et un canal dit montant, le canal descendant transmettant des signaux sous la forme de paquets numériques depuis un serveur vers des usagers, une horloge destinée au multiplexage de messages montant depuis les usagers vers le serveur étant définie par des marqueurs dont la position est indiquée périodiquement par un nombre, appelé pointeur, incorporé dans un des paquets du canal descendant, ce pointeur indiquant le temps restant à écouler entre le moment où le pointeur apparaît et le moment où est placé le marqueur, caractérisé en ce qu'il comporte des moyens pour générer un paquet contenant un pointeur à un instant décalé par rapport à celui où il aurait dû être généré, et pour diminuer la valeur de ce pointeur d'une quantité égale au temps écoulé entre l'instant où le paquet qui le contient aurait dû être généré et l'instant où il l'est.

2. Signal audio-vidéo pour un système avec un canal dit descendant et un canal dit montant, signal transmis dans le canal descendant sous la forme de paquets et comprenant entre autres une horloge, servant au multiplexage de messages dans le canal montant, définie par des marqueurs dont la position est indiquée périodiquement par un nombre, appelé pointeur, incorporé dans un des paquets, dont la valeur indique le temps restant à écouler entre le moment où le pointeur apparaît et le moment où est placé le marqueur, caractérisé en ce qu'un paquet contenant un pointeur est généré à un instant décalé par rapport à celui où il aurait dû être généré, et.la valeur de ce pointeur est diminuée d'une quantité égale au temps écoulé entre l'instant où le paquet qui le contient aurait dû être généré et l'instant où il l'est.

3. Procédé pour calculer, dans un système interactif de distribution de signaux audio-vidéo numériques transmettant des signaux depuis un serveur vers des usagers sous la forme de paquets, la valeur d'un pointeur indiquant la position d'un marqueur de temps, incorporé dans un des paquets, la valeur de ce pointeur indiquant le temps restant à écouler entre le moment où le paquet contenant le pointeur apparaît et le moment où est placé le marqueur, caractérisé en ce qu'un paquet contenant un pointeur est généré à un instant décalé par rapport à celui où il aurait dû être généré, en ce que la valeur de ce pointeur est diminuée d'une quantité égale au temps écoulé entre l'instant où le paquet qui le contient aurait dû être généré et l'instant où il l'est.

FIG. 1

FIG. 2

FIG. 3

FIG. 4

x = ... ~ 10

inter ~ 20

D = ... ~ 30

40

?     N

D = D + C ~ 50

FIG. 5

EP 0 939 507 A1

## RAPPORT DE RECHERCHE EUROPEENNE

**Office européen des brevets**

Numéro de la demande

EP 99 20 0452

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | WO 96 39762 A (SYMMETRICOM INC) 12 décembre 1996 * page 7 * * page 9, ligne 9 - page 11, ligne 12 * --- | 1-3 | H04J3/06 |
| A | EP 0 768 769 A (GEN INSTRUMENT CORP) 16 avril 1997 * abrégé * --- | 1-3 | |
| A | US 5 680 394 A (BINGHAM JOHN A C ET AL) 21 octobre 1997 * abrégé * ----- | 1-3 | |

| | DOMAINES TECHNIQUES RECHERCHES (Int.Cl.6) |
|---|---|
| | H04J |

Le présent rapport a été établi pour toutes les revendications

| Lieu de la recherche | Date d'achèvement de la recherche | Examinateur |
|---|---|---|
| BERLIN | 31 mai 1999 | Raeymaekers, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

**ANNEXE AU RAPPORT DE RECHERCHE EUROPEENNE
RELATIF A LA DEMANDE DE BREVET EUROPEEN NO.**   EP 99 20 0452

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-05-1999

| Document brevet cité au rapport de recherche | Date de publication | Membre(s) de la famille de brevet(s) | Date de publication |
|---|---|---|---|
| WO 9639762 A | 12-12-1996 | US 5828670 A | 27-10-1998 |
| | | CA 2223708 A | 12-12-1996 |
| | | EP 0830758 A | 25-03-1998 |
| EP 0768769 A | 16-04-1997 | US 5666358 A | 09-09-1997 |
| | | AU 702238 B | 18-02-1999 |
| | | AU 7020096 A | 24-04-1997 |
| | | CA 2185831 A | 17-04-1997 |
| | | JP 9135226 A | 20-05-1997 |
| | | NO 964393 A | 17-04-1997 |
| US 5680394 A | 21-10-1997 | AU 6478296 A | 10-02-1997 |
| | | CN 1190511 A | 12-08-1998 |
| | | EP 0838109 A | 29-04-1998 |
| | | WO 9703506 A | 30-01-1997 |
| | | US 5838667 A | 17-11-1998 |